# EUROPÄISCHE PATENTSCHRIFT

(11) **EP 1 044 803 B1**
(45) Veröffentlichungstag und Bekanntmachung des Hinweises auf die Patenterteilung: **26.01.2005**
(21) Anmeldenummer: 00107192.7
(22) Anmeldetag: 12.04.2000
(51) Int. Cl.: B32B 27/12, B60R 21/16

(54) **Textiles Gassack-Material, Schutzkissen für ein Fahrzeuginsassen-Rückhaltesystem und Verfahren zur Herstellung des textilen Gassack-Materials**
Textile airbag material, protective cushion for a vehicle passenger restraint system and method for manufacturing the textile airbag material
Airbag en matière textile, coussin de protection pour un système de retenue de passager dans un véhicule et procédé de fabrication de l'airbag en matière textile

(30) Priorität: 13.04.1999 DE 29906538 U
(43) Veröffentlichungstag der Anmeldung: 18.10.2000
(73) Patentinhaber: TRW Automotive GmbH, 73553 Alfdorf (DE)
(72) Erfinder: Ritter, Philipp, 55578 Wallertheim (DE)
(74) Vertreter: Degwert, Hartmut, Dipl.-Phys.

(56) Entgegenhaltungen:
- EP-A- 0 496 894
- US-A- 5 259 645
- US-A- 5 707 711
- PATENT ABSTRACTS OF JAPAN vol. 016, no. 538 (M-1335), 9. November 1992 (1992-11-09) & JP 04 201649 A (TORAY IND INC), 22. Juli 1992 (1992-07-22)

## Beschreibung

Die Erfindung betrifft ein textiles Gassack-Material für ein Schutzkissen eines Fahrzeuginsassen-Rückhaltesystems, mit wenigstens einer Gewebelage, die zwei übereinanderliegende, randseitig miteinander verwebte Wandungsabschnitte aufweist, wobei jeweils auf einer Seite der Wandungsabschnitte vollflächig wenigstens eine Folie aus luftdichtem Material aufgebracht ist. Die Erfindung betrifft ferner ein Schutzkissen für ein Fahrzeuginsassen-Rückhaltesystem sowie ein Verfahren zur Herstellung des textilen Gassack-Materials.

An das textile Gassack-Material für die Herstellung von aufblasbaren Schutzkissen in Fahrzeugen werden Forderungen gestellt, die maßgeblich durch den Einsatzzweck und die Anforderung des Schutzkissens im Fahrzeug bestimmt werden. Während bei Schutzkissen gegen Frontalaufprall ein kontrolliertes Abströmverhalten für den Energieabbau beim Aufprall verlangt wird, sollen Schutzkissen insbesondere im Kopfbereich im Fall des Fahrzeugüberschlags, über einen Zeitraum von bis zu mehreren Sekunden wirksam bleiben. Das überwiegend zur Herstellung von Gassäcken verwendete Textilmaterial sind mehrlagige Gewebe in Leinwandbindung, welche entweder durch Nähprozesse oder webtechnisch vorwiegend mittels Panamabindung partiell verbunden werden. Die Gasdurchlässigkeit eines solchen Gewebes kann gezielt eingesetzt werden, um bei einem Schutzkissen gegen Frontaufprall das angestrebte Abströmverhalten zu verwirklichen. Für Schutzkissen im Fall des Fahrzeugüberschlags müssen hingegen zusätzliche Maßnahmen getroffen werden, um die Wandung des Schutzkissens praktisch gasundurchlässig zu machen. Besonders bei Schutzkissenhüllen aus zwei übereinanderliegenden, partiell miteinander verwebten Gewebelagen, deren Verbindung aus fertigungstechnischen Gründen vorwiegend in einer Panamabindung erzeugt werden, muß der relativ großen Gasdurchlässigkeit der Verbindungsbereiche mit einem hohen Beschichtungsauftrag begegnet werden. Zur Beschichtung wird überwiegend ein Silikon-Material verwendet, das außenseitig in Mengen von mehr als 100 g/m² aufgetragen wird. Der hohe Beschichtungsauftrag hat aber hinsichtlich Packvolumen, Struktursteifigkeit und Reibhaftung negative Auswirkungen.

Ein textiles Gassack-Material mit einer Gewebelage, die zwei Übereinanderliegende, randseitig miteinander verwebte Wandungsabschnitte aufweist, ist in der US 5 259 645 gezeigt.

Aus der US 5 707 711 ist ein textiles Gassack-Material der eingangs genannten Art bekannt.

Durch die Erfindung wird ein textiles Gassack-Material bereitgestellt, das bei vermindertem Aufwand eine Reduzierung der Masse der Schutzkissenhülle, eine Reduzierung des Packvolumens und der Wandungssteifigkeit sowie eine Verminderung der Reibhaftung gewährleistet.

Die Luftundurchlässigkeit des Gassack-Materials wird durch die aufgebrachte Folie gewährleistet. Der Beschichtungsauftrag kann folglich auf die zur Verbindung der beiden Flächengebilde benötigte Menge reduziert werden. Trotz der damit verbundenen Einsparung ist das erfindungsgemäBe Gassack-Material überlegen, weil die Gesamtdicke der Schutzkissenhülle vermindert wird, ebenso wie die Steifigkeit der Schutzkissenhülle. Dies führt zu einem verbesserten Faltungs- und Entfaltungsverhalten, weiter verbessert durch die glatte Außenfläche der Folie, die sich günstig auf die Reibhaftung auswirkt.

Das Aufbringen der Folie auf die Gewebelage kann unter Anwendung herkömmlicher Technologie wie Kaschieren/Laminieren erfolgen. Insbesondere kann die Folie mit der Gewebelage durch Substanzen niederer Viskosität in Verbund gebracht werden, die von gleicher Art wie das

Gemäß einem ersten Aspekt der Erfindung ist bei einem Gassack-Material der eingangs genannten Art vorgesehen, daß die Folie mit den Wandungsabschnitten der Gewebelage durch eine separate, zwischen der Gewebelage und der Folie in einer Menge von weniger als 100 g/m² aufgebrachte niederviskose Substanz in Verbund gebracht ist. brei herkömmlichen Konstruktionen verwendete Beschichtungsmaterial sind. Es wird jedoch nur diejenige Beschichtungsmenge verwendet, die zur Herbeiführung eines Verbundes zwischen Folie und Gewebelage erforderlich ist, denn die Beschichtung muß keinen Beitrag zur Gasdichtheit leisten. Während bei herkömmlichen Gassackkonstruktionen dieser Applikation Beschichtungsmengen von 125 g/m² und mehr verwendet werden, wird bei dem erfindungsgemäßen textilen Gassack-Material die verbindende Substanz in Mengen von weniger als 100 g/m² eingesetzt. Bei bestimmten Substanzen ist es sogar möglich, Mengen von weniger als 50 g/m² einzusetzen.

Gemäß einen zweiten Aspekt der Erfindung ist bei einem textilen Gassack-Material der eingangs genannten Art vorgesehen, daß die Folie mit den Wandungsabschnitten der Gewebelage durch eine thermoplastische Substanz in Form eines Films in Verbund gebracht ist, wobei die thermoplastische Festigkeit mindestens 15°C unter der der Gewebelage liegt.

Die Erfindung schafft ferner ein Schutzkissen für ein Fahrzeuginsassen-Rückhaltesystem, dessen Hülle aus einem erfindungsgemäßen Gassack-Material gebildet ist. Vorzugsweise weist bei einem solchen Schutzkissen die Seite der Wandungsabschnitte, auf der die Folie aus luftdichtem Material aufgebracht ist, nach außen. Dies hat den Vorteil, daß die bereits vor der Beschichtung miteinander verwebten Wandungsabschnitte der Gewebelagen nicht umgestülpt werden müssen, wie es bei der Herstellung herkömmlicher, innenseitig beschichteter Schutzkissen notwendig ist. Es hat sich gezeigt, daß die außenseitig aufgebrachte Folie überraschenderweise dem Druck beim Aufblasen des Schutzkissens standhält und sich nicht von der Gewebelage ablöst. Das Vorsehen der Folie auf der Außenseite des Schutzkissens hat den weiteren Vorteil, daß die in das Schutzkissen einströmenden heißen Gase die Folie nicht beschädigen, was bei einer innenseitigen Beschichtung nicht auszuschließen ist.

Schließlich schafft die Erfindung auch ein Verfahren zur Herstellung eines erfindungsgemäßen textilen Gassack-Materials.

Weitere Vorteile und Merkmale der Erfindung ergeben sich aus der folgenden Beschreibung unter Bezugnahme auf die Zeichnungen. In den Zeichnungen zeigen:
Figur 1 schematisch einen Fahrzeuginnenraum mit einem aufgeblasenen Schutzkissen, das sich von der A-Säule über die B-Säule bis zur C-säule erstreckt;
Figur 2 schematisch eine Anlage zum Aufbringen einer Folie auf einer Gewebelage unter Verwendung einer niederviskosen Substanz; und
Figur 3 schematisch eine Anlage zum Aufbringen einer Folie auf einer Gewebelage unter Verwendung einer thermoplastischen Substanz.

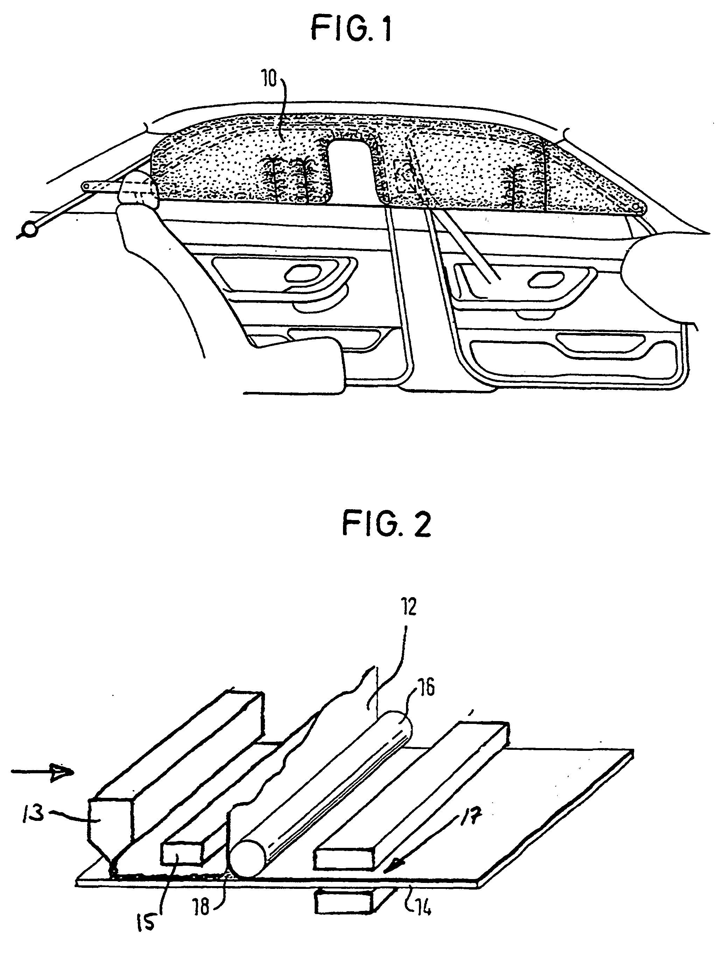

Das in Figur 1 schematisch gezeigte aufblasbare Schutzkissen 10 eines Fahrzeuginsassen-Rückhaltesystems deckt im aktiven Zustand die Seitenscheiben des Fahrzeugs ab und bildet einen Seitenaufprallschutz im Kopf- und Torsobereich. Die Hülle des Schutzkissens besteht aus einer Gewebelage mit zwei miteinander partiell am Umfang sowie an ausgewählten Zwischenbereichen miteinander verwebten Wandungsabschnitten. Da die verfügbaren Gewebematerialien keine ausreichende Gasdichtheit aufweisen, um die Schutzwirkung während einer Dauer von einigen Sekunden zu gewährleisten, ist eine Seite der das aufblasbare Schutzkissen 10 begrenzenden Wandungsabschnitte der Gewebelage, die die Hülle des Schutzkissens 10 bildet, d.h. die Außenseite des Schutzkissens, vollflächig mit wenigstens einer luftdichten Folie versehen.

Bei dem erfindungsgemäßen textilen Gassack-Material, das für die Herstellung des Schutzkissens 10 verwendet wird, ist die Gasdichtheit durch wenigstens eine Folie aus luftdichtem Material auf der Außenseite der Gewebelage gewährleistet. Figur 2 veranschaulicht den Prozeß des Aufbringens einer Folie 12 auf einer Gewebelage 14 unter Verwendung einer niederviskosen Substanz 18, welche an einer konventionellen Beschichtungseinrichtung 13 auf die Gewebelage 14 aufgetragen wird. Der Beschichtungseinrichtung 13 ist eine Fixiereinheit 15 nachgeordnet, an welcher die Viskosität der aufgebrachten Substanz 18 durch thermische Einwirkung angehoben wird. Vorzugsweise wird als Verbinder eine thermovernetzende Substanz verwendet. Besonders eignen sich Verbinder auf Basis von Silikon oder Polyurethan. Der Fixiereinheit 15 folgt eine Druckwalze 16, mittels welcher die Folie 12 senkrecht zugeführt und auf die horizontal durchlaufende Gewebelage 14 aufgebracht wird. Die dauerhafte Vernetzung zwischen Folie 12, Verbinder 18 und Gewebelage 14 erfolgt durch thermische Einwirkung in einem Kanal 17 oder mittels beheizbarer Trommeln, welche der Druckwalze 16 nachgeordnet sind. Im Hinblick auf ein problemloses Recycling basieren die Folie und das Gewebe vorzugsweise auf derselben polymeren Rohstoffbasis, insbesondere Polyamide. Auch Folie und Verbinder können auf demselben polymeren Rohstoff basieren. Diese polymere Rohstoffbasis kann auch ein Polyurethan sein.

Schon mit Folien einer Dicke von weniger als 0,10 mm kann die erforderliche Gasdichtheit erzielt werden. Die niederviskose Substanz hat nur die Aufgabe, die Folie mit der Gewebelage in Verbund zu bringen. Dafür ist eine Menge von nicht mehr als 50 g/m² ausreichend. Hinsichtlich Steifigkeit und Blockneigung hat sich eine ca. 15 µm Polyetherblockamid-Folie als besonders vorteilhaft gezeigt, welche mittels ca. 25g/m² Verbindersubstanz auf Polyurethanbasis mit dem Gewebe in Verbund gebracht wurde.

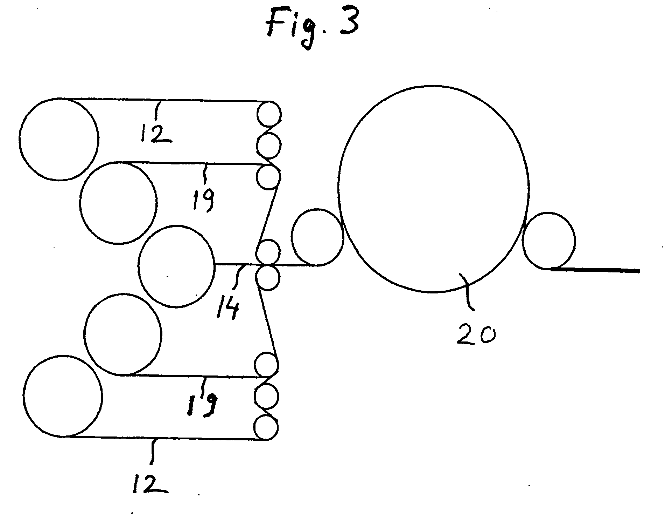

Figur 3 veranschaulicht den Prozeß des Aufbringens einer luftundurchlässigen Folie 12 auf einer Gewebelage 14 unter Verwendung eines thermoplastischen Films 19 an einem konventionellen Kaschier-/Laminierkalander. Der thermoplastische Film 19 wird zwischen die Gewebelage 14 und die luftundurchlässige Folie 12 eingebracht, bevor diese mittels mindestens einer beheizbaren Trommel 20 erwärmt werden. Die thermoplastische Festigkeit des Verbindungsfilms 19 muß so gewählt werden, daß diese mindestens 15°C unter der des Gewebes 14 und der luftundurchlässigen Folie 12 liegt. Besonders vorteilhaft haben sich ca. 30µm Verbindungsfilme 19 auf Basis modifizierter Polyolefine gezeigt, deren Schmelzbereich ca. 85 - 105°C beträgt. Als luftundurchlässige Folie 12 zeigt auch in dieser Ausführungsvariante eine ca. 15µm Polyetherblockamid-Folie hinsichtlich Steifigkeit und Blockneigung besonders vorteilhafte Eigenschaften. Je nach Anforderungsprofil können aber auch Folien auf Basis modifizierter Polyolefine mit höherer Temperaturbeständigkeit verwendet werden. Diese sollte mindestens 120 - 130°C betragen.

Besonders vorteilhaft hinsichtlich Kosten ist dieses Luftsack-Material, wenn die luftundurchlässige Folie 12 und der Verbindungsfilm 19 mittels eines Coextrusionsverfahrens hergestellt werden. Somit wird praktisch nur eine Folie produziert, welche auf beiden Seiten aus Polymeren unterschiedlicher thermischer Resistenz besteht.

Für den gezeigten Verwendungszweck als Schutzkissen insbesondere des Kopfbereichs bei einem Überschlag des Fahrzeugs wird die Schutzkissenhülle ausschließlich ohne Abströmöffnungen ausgebildet. Die verwendeten Folien sollte unter Wärmeeinwirkung in beiden Raumrichtungen eine Schrumpfung von weniger als 15 % aufweisen.

## Patentansprüche

1. Textiles Gassack-Material für ein Schutzkissen (10) eines Fahrzeuginsassen-Rückhaltesystems, mit wenigstens einer Gewebelage (14), die zwei übereinanderliegende, randseitig miteinander verwebte Wandungsabschnitte aufweist, wobei jeweils auf einer Seite der Wandungsabschnitte vollflächig wenigstens eine Folie (12) aus luftdichtem Material aufgebracht ist, **dadurch gekennzeichnet, daß** die Folie (12) mit den Wandungsabschnitten der Gewebelage (14) durch eine separate, zwischen der Gewebelage (14) und der Folie (12) in einer Menge von weniger als 100g/m² aufgebrachte niederviskose Substanz (18) in Verbund gebracht ist.

2. Textiles Gassack-Material nach Anspruch 1, **dadurch gekennzeichnet, daß** die niederviskose Substanz (18) thermovernetzende Eigenschaften besitzt.

3. Textiles Gassack-Material nach Anspruch 1, **dadurch gekennzeichnet, daß** die Folie (12) und die Gewebelage (14) auf demselben polymeren Rohstoff basieren.

4. Textiles Gassack-Material nach Anspruch 3, **dadurch gekennzeichnet, daß** die polymere Rohstoffbasis ein Polyamid ist.

5. Textiles Gassack-Material nach Anspruch 1, **dadurch gekennzeichnet, daß** die Folie (12) und die niederviskose Substanz (18) auf demselben polymeren Rohstoff basieren.

6. Textiles Gassack-Material nach Anspruch 5, **dadurch gekennzeichnet, daß** die polymere Rohstoffbasis Polyurethan ist.

7. Textiles Gassack-Material nach Anspruch 2, **dadurch gekennzeichnet, daß** die thermovernetzende Substanz ein Silikon oder Polyurethan ist.

8. Textiles Gassack-Material nach einem der vorstehenden Ansprüche, **dadurch gekennzeichnet, daß** die Folie (12) eine Dicke von weniger als 0,1 mm aufweist.

9. Textiles Gassack-Material nach einem der vorstehenden Ansprüche, **dadurch gekennzeichnet, daß** die niederviskose Substanz (18) in einer Menge von nicht mehr als 50 g/m² aufgebracht ist.

10. Textiles Gassack-Material für ein Schutzkissen (10) eines Fahrzeuginsassen-Rückhaltesystems, mit wenigstens einer Gewebelage (14), die zwei übereinanderliegende, randseitig miteinander verwebte Wandungsabschnitte aufweist, wobei jeweils auf einer Seite der Wandungsabschnitte vollflächig wenigstens eine Folie (12) aus luftdichtem Material aufgebracht ist, **dadurch gekennzeichnet, daß** die Folie (12) mit den Wandungsabschnitten der Gewebelage (14) durch eine thermoplastische Substanz in Form eines Films (19) in Verbund gebracht ist, dessen thermoplastische Festigkeit mindestens 15°C unter der der Gewebelage liegt.

11. Textiles Gassack-Material nach Anspruch 10, **dadurch gekennzeichnet, daß** der Film (19) auf einem modifizierten Polyolefin basiert, dessen Schmelzpunkt in einem Bereich von ca. 85 - 105°C liegt.

12. Textiles Gassack-Material nach Anspruch 10 oder 11, **dadurch gekennzeichnet, daß** die Folie (12) auf einem modifizierten Polyolefin basiert, dessen Temperaturbeständigkeit mindestens 120°C beträgt.

13. Textiles Gassack-Material nach Anspruch 10 oder 11, **dadurch gekennzeichnet, daß** die Folie (12) eine Polyetherblockamid-Folie ist.

14. Textiles Gassack-Material nach einem der vorstehenden Ansprüche, **dadurch gekennzeichnet, daß** die Folie (12) unter Wärmeeinwirkung in beiden Raumrichtungen eine Schrumpfung von weniger als 15% aufweist.

15. Textiles Gassack-Material nach einem der vorstehenden Ansprüche, **dadurch gekennzeichnet, daß** es ohne Abströmöffnungen ausgebildet ist.

16. Schutzkissen für ein Fahrzeuginsassen-Rückhaltesystem, **dadurch gekennzeichnet, daß** die Hülle des Schutzkissens (10) aus einem textilen Gassack-Material gemäß einem der vorstehenden Ansprüche gebildet ist.

17. Schutzkissen nach Anspruch 16, **dadurch gekennzeichnet, daß** die Seite der Wandungsabschnitte, auf der die Folie (12) aus luftdichtem Material aufgebracht ist, nach außen weist.

18. Verfahren zur Herstellung eines textilen Gassack-Materials gemäß Anspruch 1, wobei das Verfahren folgende Schritte umfaßt:
- randseitiges Verweben wenigstens zweier Wandungsabschnitte einer Gewebelage (14); und
- vollflächiges Aufbringen wenigstens einer Folie (12) aus luftdichtem Material auf jeweils eine Seite der Wandungsabschnitte .

19. Verfahren nach Anspruch 18, **dadurch gekennzeichnet, daß** die Folie (12) unter Verwendung einer niederviskosen Substanz (18) aufgebracht wird, welche an einer herkömmlichen Beschichtungseinrichtung (13) aufgetragen wird.

20. Verfahren nach Anspruch 19, **dadurch gekennzeichnet, daß** der Beschichtungseinrichtung (13) eine Fixiereinheit (15) nachgeordnet ist, an welcher die Viskosität der aufgetragenen niederviskosen Substanz (18) durch thermische Einwirkung angehoben wird.

21. Verfahren nach Anspruch 20, **dadurch gekennzeichnet, daß** der Fixiereinheit (15) eine Druckwalze (16) für die senkrechte Zuführung der Folie (12) zu der horizontal durchlaufenden Gewebelage (14) ein Kanal (17) oder beheizbare Trommeln nachgeordnet ist bzw. sind, in dem bzw. mittels denen eine dauerhafte Vernetzung zwischen Folie (12), niederviskoser Substanz (18) und den Wandungsabschnitten der Gewebelage (14) durch thermische Einwirkung erreicht wird.

22. Verfahren nach Anspruch 18, **dadurch gekennzeichnet, daß** die Folie (12) unter Verwendung eines thermoplastischen Films (19) aufgebracht wird, welcher an einem herkömmlichen Kaschier-/Laminierkalander aufgetragen wird.

23. Verfahren nach Anspruch 22, **dadurch gekennzeichnet, daß** der thermoplastische Film (19) zwischen die Gewebelage (14) und die Folie (12) eingebracht wird, bevor diese mittels wenigstens einer beheizbaren Trommel (20) erwärmt wird.

24. Verfahren nach Anspruch 22 oder 23, **dadurch gekennzeichnet, daß** die Folie (12) und der Film (19) mittel eines Coextrusionsvefahrens hergestellt werden, wobei die Folie (12) und der thermoplastische Film (19) aus Polymeren unterschiedlicher thermischer Resistenz bestehen.

## Claims

1. A textile gas bag material for a protective cushion (10) of a vehicle occupant restraint system, comprising at least one fabric layer (14) having two superimposed wall portions interwoven with each other at their edges, at least one foil (12) made of an air-tight material being applied over the entire surface area of one side of each of the wall portions, **characterized in that** the foil (12) is brought into bond with the wall portions of the fabric layer (14) by a separate, low-viscosity substance (18) applied between the fabric layer (14) and the foil (12) in a quantity of less than 100 g/m².

2. The textile gas bag material according to claim 1, **characterized in that** the low-viscosity substance (18) has thermo-crosslinking properties.

3. The textile gas bag material according to claim 1, **characterized in that** the foil (12) and the fabric layer (14) are based on the same polymeric raw material.

4. The textile gas bag material according to claim 3, **characterized in that** the polymeric basic raw material is a polyamide.

5. The textile gas bag material according to claim 1, **characterized in that** the foil (12) and the low-viscosity substance (18) are based on the same polymeric raw material.

6. The textile gas bag material according to claim 5, **characterized in that** the polymeric basic raw material is a polyurethane.

7. The textile gas bag material according to claim 2, **characterized in that** the thermo-crosslinking substance is a silicone or polyurethane.

8. The textile gas bag material according to any of the preceding claims, **characterized in that** the foil (12) has a thickness of less than 0.1 mm.

9. The textile gas bag material according to any of the preceding claims, **characterized in that** the low-viscosity substance (18) is applied in a quantity of no more than 50 g/m².

10. A textile gas bag material for a protective cushion (10) of a vehicle occupant restraint system, comprising at least one fabric layer (14) having two superimposed wall portions interwoven with each other at their edges, at least one foil (12) made of an air-tight material being applied over the entire surface area of one side of each of the wall portions, **characterized in that** the foil (12) is brought into bond with the wall portions of the fabric layer (14) by a thermoplastic substance in the form of a film (19) having a thermoplastic solidity that is at least 15°C lower than that of the fabric layer.

11. The textile gas bag material according to claim 10, **characterized in that** the film (19) is based on a modified polyolefin having a melting point in a range of from approx. 85 to 105°C.

12. The textile gas bag material according to claim 10 or 11, **characterized in that** the foil (12) is based on a modified polyolefin having a temperature stability of at least 120°C.

13. The textile gas bag material according to claim 10 or 11, **characterized in that** the foil (12) is a polyether block amide foil.

14. The textile gas bag material according to any of the preceding claims, **characterized in that** under the action of heat the foil (12) has a shrinkage of less than 15% in both spatial directions.

15. The textile gas bag material according to any of the preceding claims, **characterized in that** it is designed to have no outflow openings.

16. A protective cushion for a vehicle occupant restraint system, **characterized in that** the casing of the protective cushion (10) is formed of a textile gas bag material according to any of the preceding claims.

17. The protective cushion according to claim 16, **characterized in that** the side of the wall portions on which the foil (12) made of an air-tight material is applied faces outwards.

18. A method of producing a textile gas bag material according to claim 1, the method comprising the following steps:
- interweaving at least two wall portions of a fabric layer (14) at their edges; and
- applying at least one foil (12) made of an air-tight material over the entire surface area of one side of each of the wall portions.

19. The method according to claim 18, **characterized in that** the foil (12) is applied by using a low-viscosity substance (18) which is spread on at a conventional coating device (13).

20. The method according to claim 19, **characterized in that** the coating device (13) is succeeded by a fixing unit (15) where the viscosity of the low-viscosity substance (18) spread on is raised by thermal action.

21. The method according to claim 20, **characterized in that** the fixing unit (15) is succeeded by a press roller (16) for vertically supplying the foil (12) to the horizontally travelling fabric layer (14) and by a channel (17) or by heatable cylinders in which or by means of which a durable crosslinking between the foil (12), the low-viscosity substance (18) and the wall portions of the fabric layer (14) is achieved by thermal action.

22. The method according to claim 18, **characterized in that** the foil (12) is applied by using a thermoplastic film (19) which is spread on at a conventional covering/laminating calender.

23. The method according to claim 22, **characterized in that** the thermoplastic film (19) is introduced between the fabric layer (14) and the foil (12) before the latter is heated by means of at least one heatable cylinder (20).

24. The method according to claim 22 or 23, **characterized in that** the foil (12) and the film (19) are produced by means of a co-extrusion process, the foil (12) and the thermoplastic film (19) being made of polymers of different thermal resistance.

## Revendications

1. Matériau textile de coussin à gaz pour un coussin de protection (10) d'un système de retenue de passager de véhicule, comportant au moins une couche de tissu (14) qui présente deux tronçons de paroi situés l'un au-dessus de l'autre et tissés l'un à l'autre sur le bord, au moins une feuille (12) en matériau étanche à l'air étant appliquée sur toute la surface d'un côté respectif des tronçons de paroi, **caractérisé en ce que** la feuille (12) est assemblée aux tronçons de paroi de la couche de tissu (14) par une substance (18) séparée faiblement visqueuse et appliquée dans une quantité de moins de 100g/m² entre la couche de tissu (14) et la feuille (12).

2. Matériau textile de coussin à gaz selon la revendication 1, **caractérisé en ce que** la substance (18) faiblement visqueuse possède des propriétés thermo-réticulantes.

3. Matériau textile de coussin à gaz selon la revendication 1, **caractérisé en ce que** la feuille (12) et la couche de tissu (14) se basent sur la même matière première polymère.

4. Matériau textile de coussin à gaz selon la revendication 3, **caractérisé en ce que** la base de la matière première polymère est un polyamide.

5. Matériau textile de coussin à gaz selon la revendication 1, la feuille (12) et la substance (18) faiblement visqueuse se basent sur la même matière première polymère.

6. Matériau textile de coussin à gaz selon la revendication 5, **caractérisé en ce que** la base de la matière première polymère est du polyuréthane.

7. Matériau textile de coussin à gaz selon la revendication 2, **caractérisé en ce que** la substance thermo-réticulante est un silicone ou un polyuréthane.

8. Matériau textile de coussin à gaz selon l'une des revendications précédentes, **caractérisé en ce que** la feuille (12) présente une épaisseur de moins de 0,1 mm.

9. Matériau textile de coussin à gaz selon l'une des revendications précédentes, **caractérisé en ce que** la substance (18) faiblement visqueuse est appliquée en une quantité qui n'est pas supérieure à 50 g/mm².

10. Matériau textile de coussin à gaz pour un coussin de protection (10) d'un système de retenue de passager de véhicule, comportant au moins une couche de tissu (14) qui présente deux tronçons de paroi situés l'un au-dessus de l'autre et tissés l'un à l'autre sur le bord, au moins une feuille (12) en matériau étanche à l'air étant appliquée sur toute la surface d'un côté respectif des tronçons de paroi, **caractérisé en ce que** la feuille (12) est assemblée aux tronçons de paroi de la couche de tissu (14) par une substance thermoplastique sous forme d'un film (19) dont la solidité thermoplastique est au moins de 15° C inférieure à celle de la couche de tissu.

11. Matériau textile de coussin à gaz selon la revendication 10, **caractérisé en ce que** le film (19) se base sur une polyoléfine modifiée dont le point de fusion est situé dans une plage d'environ 85 à 105°C.

12. Matériau textile de coussin à gaz selon la revendication 10 ou 11, **caractérisé en ce que** la feuille (12) se base sur une polyoléfine modifiée dont la résistance à la chaleur est d'au moins 120°C.

13. Matériau textile de coussin à gaz selon la revendication 10 ou 11, **caractérisé en ce que** la feuille (12) est une feuille de polyéther bloc amide.

14. Matériau textile de coussin à gaz selon l'une des revendications précédentes, **caractérisé en ce que** la feuille (12) présente sous l'effet de la chaleur une rétraction de moins de 15 % dans les deux directions dans l'espace.

15. Matériau textile de coussin à gaz selon l'une des revendications précédentes, **caractérisé en ce qu'**il est réalisé sans orifices d'évacuation.

16. Coussin de protection pour un système de retenue de passager de véhicule, **caractérisé en ce que** la housse du coussin de protection (10) est formée en un matériau textile de coussin à gaz selon l'une des revendications précédentes.

17. Coussin de protection selon la revendication 16, **caractérisé en ce que** la face des tronçons de paroi, sur laquelle est appliquée la feuille (12) en matériau étanche à l'air, est tournée vers l'extérieur.

18. Procédé de fabrication d'un matériau textile de coussin à gaz selon la revendication 1, comprenant les étapes suivantes :
- tissage d'au moins deux tronçons de parois d'une couche de tissu (14) sur le bord ;
- application d'au moins une feuille (12) en matériau étanche à l'air sur toute la surface d'un côté respectif des tronçons de paroi.

19. Procédé selon la revendication 18, **caractérisé en ce que** la feuille (12) est appliquée en utilisant une substance (18) faiblement visqueuse qui est étalée sur un dispositif d'enduction (13) classique.

20. Procédé selon la revendication 19, **caractérisé en ce qu'**en aval du dispositif d'enduction (13) est agencée une unité de fixage (15) au niveau de laquelle la viscosité de La substance (18) à faible viscosité étalée est augmentée par effet thermique.

21. Procédé selon la revendication 20, **caractérisé en ce qu'**en aval de l'unité de fixage (15) est/sont agencé(s) un rouleau compresseur (16) pour l'amenée de la feuille (12) perpendiculairement à la couche de tissu (14) passant horizontalement et un canal (17) ou des tambours chauffants dans lequel ou au moyen desquels, respectivement, une réticulation durable entre la feuille (12), la substance à faible viscosité (18) et les tronçons de paroi de la couche de tissu (14) est obtenue par effet thermique.

22. Procédé selon la revendication 18, **caractérisé en ce que** la feuille (12) est appliquée en utilisant un film (19) thermoplastique qui est étalé sur une calandre de contrecollage/laminage classique.

23. Procédé selon la revendication 22, **caractérisé en ce que** le film thermoplastique (19) est introduit entre la couche de tissu (14) et la feuille (12) avant de réchauffer celle-ci au moyen d'au moins un tambour (20) chauffant.

24. Procédé selon la revendication 22 ou 23, **caractérisé en ce que** la feuille (12) et le film (19) sont fabriqués par procédé de coextrusion, la feuille (12) et le film thermoplastique (19) étant en polymères de différente résistance thermique.
